# EUROPEAN PATENT APPLICATION

(11) **EP 1 522 751 A1**
(43) Date of publication of application: **13.04.2005**
(21) Application number: 03256435.3
(22) Date of filing: 09.10.2003
(51) Int. Cl.: F16C 33/66, F16N 7/32

(54) **Method and apparatus for lubricating a bearing assembly by supplying grease and gas**

(71) Applicant: Corus UK Limited, London SW1 4WY (GB)
(72) Inventor: Preshaw, David Alan, Workington, Cumbria CA14 3HT (GB)
(74) Representative: Kruit, J., Ir.

(57) **Abstract**

Method of lubricating a bearing assembly and preventing the ingress of contaminants wherein gas is supplied and grease is supplied to the bearing assembly and supplied grease and gas are transported through and discharged from the bearing assembly.

## Description

This invention relates to a method of lubricating a bearing assembly and a method of preventing the ingress of contaminants into the bearing assembly. The invention also relates to an apparatus for performing the method of the invention.

Bearing assemblies are used in a very wide range of applications. Lubrication of a bearing assembly is essential. It is also important to maintain the integrity of a bearing by avoiding the ingress of foreign matter or contaminants into the bearing assembly and causing damage which causes delays and extra costs. This is particularly important in heavy industrial works such as steel mills where contaminants such as water, other fluids, metal particles, finely divided powders, acids etc may be present in the surroundings of the bearing assembly. The maintenance of bearing integrity against the ingress of undesirable foreign matter or contaminants is also important in applications such as processing lines, e.g. for food, where there is a risk of the food entering the bearing assembly. The use of seals such as for example mechanical seals is well known but such seals often do not sufficiently prevent the ingress of contaminants, particularly once they have worn in.

It is an object of the present invention to provide an improved method of lubricating a bearing assembly.

It is a further object of the invention to provide an improved method of preventing the ingress of contaminants into the bearing assembly.

It is a further object of the invention to provide an improved method of lubricating a bearing assembly and preventing the ingress of contaminants into the bearing assembly.

It is a further object of the invention to provide a lower cost method of lubricating a bearing assembly and preventing the ingress of contaminants into the bearing assembly.

It is a further object of the invention to provide a method of lubricating a bearing assembly and preventing the ingress of contaminants into the bearing assembly that can be retrofitted to an existing bearing assembly.

One or more of these objects are achieved by a method of lubricating a bearing assembly and preventing the ingress of contaminants wherein gas and grease are supplied to the bearing assembly and supplied grease and gas are transported through and discharged from the bearing assembly.

It is known in the art to achieve lubrication of a bearing assembly by pumping a continuous through-flow of grease through the bearing assembly. For example, in continuous casting equipment grease is usually fed into a bearing cavity of the bearing assembly via the bearing housing. Typically 1.5 to 3 cc of grease is fed in per pump cycle with one pump cycle occurring every 10 to 20 minutes. The grease exits the bearing assembly via seals between the bearing housing and the rotating shaft or via exit holes in the bearing housing or seal carriers. The grease outflow from the bearing helps to prevent the ingress of contaminants.

It is also known to lubricate a bearing by using a flow of compressed air to carry oil into the bearing assembly. In such a known system oil is released at a desired rate into a stream of compressed air. The compressed air transports the oil to the bearing via oil-air pipes. Inside the oil-air pipes, under the influence of the compressed air, a continuous oil film is gradually formed from the released oil. This film moves in streaks along the inside of the oil-air pipe to the point of friction or seal in the bearing assembly. There, the oil is detached from the pipe inner wall by the air stream. The friction points of the bearing assembly are lubricated, cooled by the compressed air and at the same time, ingress of contaminants into the bearing assembly is prevented by the positive pressurisation of the bearing assembly.

Both of these prior art methods have disadvantages. The conventional grease lubricating method uses large amounts of grease, which is costly and creates undesirable environmental hazards and disposal requirements. The grease within, for example, continuous casting installations is usually deposited in the settlement basins of the open cooling water system. Much of the grease combines with mill scale and general sludge and has to be disposed of in landfill sites. Some of the grease ends up in the cooling system where it can trap dirt and cause unwanted blockages especially of spray nozzles and heat shields.

The conventional method using oil and air requires a complex system of oil air pipes and complex apparatus for metering and distributing the oil and air. Large volumes of compressed air are also required to distribute the oil.

By using a combination of gas and grease the method of the invention results in a significantly lower consumption of grease in comparison with a conventional grease lubricating method. Sufficient grease to lubricate the bearing assembly is supplied but it is not the grease discharge alone that is required to prevent the ingress of contaminants as the gas supplied is discharged along with the grease and the combined discharge of gas and grease from the bearing assembly helps prevent the ingress of contaminants. The consumption of gas is also significantly reduced in comparison with a conventional oil and air method, as the gas supplied to the bearing does not need to be highly compressed to ensure a sufficient flow of lubricant into the bearing as is the case with the known oil/air system. The outflow of grease and gas in the present invention helps prevent the ingress of contaminants whilst the bearing assembly is only slightly over-pressurised. In the present invention the majority of the grease and gas supplied to the bearing assembly is transported through and discharged from the assembly.

The grease used in the present invention is preferably within the range of a medium soft to a semi fluid grease. The grease used in the present invention preferably has a penetration in the range from 475 to 220 when measured in accordance with ASTM 217-IP 50 to give good lubrication performance and adequate flow through the bearing assembly. Penetration is a non dimensional value obtained by measuring, in tenths of a millimetre, the depth to which a standard cone sinks into the grease in five seconds at a temperature of 25°C (ASTM 217-IP 50). The grease preferably has a penetration number between 000 and 3. The penetration number is in accordance with the classification used by the National Lubricating Grease Institute (NLGI) at date of filing.

The gas is preferably dried before being supplied to the bearing assembly to avoid water entering the bearing and causing it to corrode and fail. The gas used is preferably air in order to keep costs down or any inert gas such as nitrogen in order to reduce the risk of detrimental reactions occurring in the bearing assembly. If a compressed air system is already present it can be used to supply gas. Such a compressed air system should preferably be fitted with gas-drying means and means for reducing the pressure before the gas is fed into the bearing assemblies, via a suitable pipe system. The gas is preferably supplied via discrete feeds which each service a group of bearing assemblies e.g. a group numbering ten.

The gas flow rate to the bearing assembly or multiple bearing assemblies is preferably monitored. A detected reduction in the gas flow provides a means of alerting operators to malfunctions in the bearing due to e.g. contaminants causing a blockage or damaged feed pipes restricting the gas flow. Preferably calorimetric flow meters are used for accuracy. Each feed preferably has a calorimetric flow meter monitoring the gas. The moisture content and/or pressure of the gas supplied to the bearing assembly may also be monitored by means of appropriate instrumentation (e.g. pressure transmitter, flow meter and hygrometer).

The method of the present invention is preferably used for a bearing assembly comprising roller elements e.g. plain rollers, spherical rollers, barrel rollers or balls, as such bearing assemblies are particularly vulnerable to failure if not sufficiently lubricated and/or if penetrated by contaminants.

The method of the present invention is particularly suitable for use with bearing assemblies comprising deep groove ball bearings, self aligning ball bearings, angular contact ball bearings, cylindrical roller bearings, needle roller bearings, spherical roller bearings, taper roller bearings, thrust ball bearings, cylindrical roller thrust bearings, needle roller thrust bearings, spherical roller thrust bearings or Y bearing units.

The method of the present invention is particularly useful in metal production and/or metal processing machinery and in particular in steel mill applications. The method of the present invention is particularly suitable for use in steel mill applications such as transfer roller tables and continuous casters where contaminants such as water and mill scale are often present in the surroundings of the bearing elements and where failure of a bearing is potentially dangerous as well as causing costly delays. Within a continuous caster the method is preferably used within the main strand containment machinery and the downstream discharge roller tables.

The present invention also relates to an apparatus for performing the method according to the invention comprising a bearing assembly wherein the bearing assembly comprises a bearing housing, at least one bearing, an inlet for supplying gas, an inlet for supplying grease and at least one outlet for discharging grease and gas.

The grease and gas flow through the bearing assembly thereby provides lubrication before discharging from the bearing assembly via the at least one outlet where the combined discharge of the gas and grease prevent the ingress of contaminants without the bearing assembly needing to be highly over-pressurised. The outlet for the grease and gas may be through seals in the bearing assembly and/or through outlet holes in the bearing assembly. The outlet or bypass holes ensure sufficient gas and grease can flow out of the bearing assembly particularly before the seals have worn in and are passing sufficient grease and gas.

The invention will now be illustrated by means of a non-limitative example.

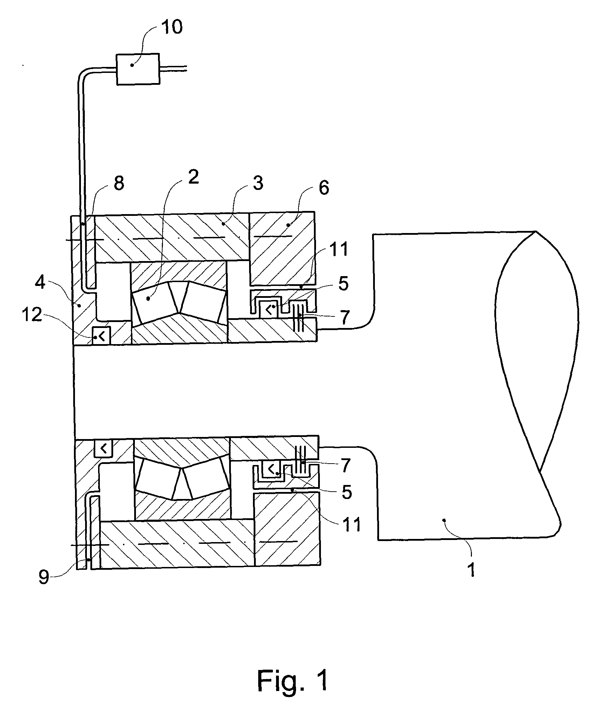

Figure 1 illustrates part of a roller bearing assembly from a continuous caster.

A transport roller 1 is supported by roller elements 2 within a bearing housing 3. The side of the bearing housing closest to the transport roller 1, is the inner side of the bearing and the side of the bearing furthest from the transport roller 1 is the outer side. The bearing housing outer end cap 4 contains an elastomeric seal 12 which is oriented to prevent loss of grease and gas past the outer end cap thereby forcing it to exit the bearing housing on the roller or inner side of the bearing housing. The bearing housing inner end cap or inner end seal carrier 6 contains a mechanical seal 7 and an elastomeric seal 5. The mechanical seal 7 in the inner seal carrier provides less effective sealing than the elastomeric seal 5 but is more resistant to, for example, abrasive particles. The bearing housing inner end cap may only contain an elastomeric seal. Grease and gas discharge from the bearing housing via small bypass holes 11 drilled in the inner end cap 6 and/or via the elastomeric and mechanical seals 5, 7, which are not wholly gas and/or grease tight. The bypass holes ensure sufficient gas and grease can flow out of the bearing assembly particularly before the seals have worn in and are passing sufficient grease and gas.

The outer end cap 4 of the bearing assembly is provided with a gas supply inlet 8 and a grease supply inlet 9. The grease can be supplied by existing or new feeding systems. An existing compressed air system can be used to supply gas. The gas is dried and set to an appropriate pressure before being supplied to the bearing assembly. The gas used is preferably air or an inert gas such as nitrogen. The gas is preferably supplied via discrete feeds which each service a group of bearing assemblies e.g. a group numbering ten. The gas and grease supply inlets are shown in figure 1 positioned at 180° to each other in the outer end cap 4, but they may be positioned at different orientations to each other in the outer end cap. The grease may be supplied to the bearing housing on the same side of the bearing as the gas or may be supplied to the bearing housing on the opposite side of the bearing to the gas feed (e.g. the gas may be supplied to the inner side of the bearing housing and the grease to the outer side). The gas and/or the grease supply inlet may run through the bearing house 3 and supply gas and/or grease from the bearing house 3 to the roller elements in the bearing assembly. The gas and grease may be supplied to the bearing assembly via the same inlet. The control system 10 monitors the humidity, pressure and flow rate of the gas and contains an alarm system.

During operation the internal bearing assembly condition is such that it contains a slightly higher pressure than that outside of the bearing and this is monitored by means of an gas flow meter present e.g. within the monitoring system 10. A reduction in the gas flow through the bearing will set off the alarm system within the control system 10 to alert the plant operators to a malfunction. The pressure in the bearing assembly is preferably 0.1 to 0.85 kg/cm².

The method and apparatus of the present invention has been shown in experiments to have a grease consumption ten times smaller, and possibly lower, than the grease consumption of the known grease lubricating system whilst also having a gas flow rate ten times smaller, and possibly lower, than that of a conventional oil and air system.

## Claims

1. Method of lubricating a bearing assembly and preventing the ingress of contaminants wherein gas is supplied and grease is supplied to the bearing assembly and supplied grease and gas are transported through and discharged from the bearing assembly.

2. Method according to claim 1, wherein the grease is within the range of a medium soft to a semi fluid grease.

3. Method according to claim 2, wherein the grease has a penetration in the range from 475 to 220.

4. Method according to any preceding claim, wherein the gas flow to the bearing assembly is monitored.

5. Method according to any preceding claim wherein the gas is dried before being supplied to the bearing assembly.

6. Method according to any preceding claim wherein the gas is air or any inert gas.

7. Method according to any preceding claim, wherein the bearing assembly comprises roller elements.

8. Apparatus for performing the method according to any preceding claim comprising a bearing assembly wherein the bearing assembly comprises a bearing housing, at least one bearing, an inlet for supplying gas, an inlet for supplying grease and at least one outlet for discharging grease and gas.

9. Use of the method of any one of claims 1 to 7 in metal production and/or metal processing machinery.
